# EUROPEAN PATENT APPLICATION

(11) **EP 1 083 496 A1**
(43) Date of publication of application: **14.03.2001**
(21) Application number: 00906663.0
(22) Date of filing: 03.03.2000
(51) Int. Cl.: G06F 17/30, G06F 13/00, H04L 12/58

(54) **TRANSMITTER, RECEIVER, TRANSMITTER/RECEIVER SYSTEM, TRANSMISSION METHOD AND RECEPTION METHOD**

(30) Priority: 03.03.1999 JP 5585999
(71) Applicant: Sony Corporation, Tokyo 141-0001 (JP)
(72) Inventor: Nishio, Fumihiko, Shinagawa-ku, Tokyo 141-0001 (JP); Gonno, Yoshihisa, Shinagawa-ku, Tokyo 141-0001 (JP); Haraoka, Kazuo, Shinagawa-ku, Tokyo 141-0001 (JP); Takabayashi, Kazuhiko, Shinagawa-ku, Tokyo 141-0001 (JP); Yamagishi, Yasuaki, Shinagawa-ku, Tokyo 141-0001 (JP)
(74) Representative: Pilch, Adam John Michael
(86) International application number: JP0001271
(87) International publication number: WO0052600

(57) **Abstract**

A URI converting portion 302 converts a URI contained in data received by a receiving portion 301 into a fixed length URI. The fixed length URI is stored to a reception information storing portion 303 along with the data received by the receiving portion 301. On the other hand, a URI of desired contents data that is input from a URI input portion 307 is converted into a fixed length URI by a URI converting portion 305. A URI comparing portion 306 compares the fixed length URI stored in the reception information storing portion 303 with an output of the URI converting portion 305. When a match is detected as the compared result, the indefinite length URIs corresponding to the fixed length URIs (namely, the URI contained in the received data and the URI that is input from the URI input portion 307) are compared. When a match is detected as the compared result, it is determined that the contents data to which the indefinite length URI is added is that contents data that the user desires.

## Description

### Technical Field

The present invention relates to a transmitting apparatus, a receiving apparatus, a transmitting and receiving system, a transmitting method, and a receiving method for use with a digital broadcasting system that is structured on for example the Internet and that delivers contents data.

### Related Art

Although many techniques for delivering contents data have been proposed, document data written in HTML (Hyper Text Mark-up Language) is delivered on the Internet (hereinafter, these document data is referred to as HTML document). In the HTML, hyper links are represented using URIs (Uniform Resource Identifier) so as to correlate a plurality of HTML documents.

In recent years, in the field of broadcasts, a digital broadcasting system that is structured on the Internet and that delivers HTML documents therethrough has been studied. The digital broadcasting system uses digital televisions and so forth as receiving terminal units. In a conventional digital broadcast that corresponds to DVB (Digital Video Broadcasting) standard or the like, identifiers of ID values such as event_id, service_id, and component_tag are assigned to video/audio streams. In such a digital broadcasting system, URIs are added to individual resources of delivered data (video/audio stream, digital data of a digital broadcast, and so forth). Each of delivered HTML documents that are broadcast can be hyper-linked.

As a method for adding a URI to broadcast data while keeping the compatibility with the conventional digital broadcasting system, a descriptor that contains a URI can be used. In this method, when a link is selected with a URI of an HTML document by a receiver, a relevant URI is searched from a descriptor area of a received MPEG-2 section table or the like and a resource that contains the URI is accessed (displayed). In this case, since a URI is written as text data, the URI searching process includes a text pattern matching process. Thus, on the receiver side, the load imposed for this process is heavier than that for the process for simply comparing ID values.

Therefore, an object of the present invention is to provide a transmitting apparatus, a receiving apparatus, a transmitting and receiving system, a transmitting method, and a receiving method that allow the load imposed to a receiving apparatus and so forth to be alleviated for a contents data identifying process for matching URIs.

### Disclosure of the Invention

The invention of claim 1 is a receiving apparatus for receiving contents data, comprising:
a receiving means for receiving data that is transmitted;
a first identifier converting means for converting an indefinite length identifier contained in the data into a fixed length identifier;
a reception information storing means for storing contents data contained in the data, the indefinite length identifier, and the fixed length identifier;
an inputting means for inputting a user's request for contents data;
a second identifier converting means for converting an indefinite length identifier added to the contents data corresponding to the user's request into a fixed length identifier; and
a contents data identifying means for comparing the fixed length identifier stored in the reception information storing means with the fixed length identifier that is output from the second identifier converting means, generating the compared result of the fixed length identifiers, and identifying the contents data corresponding to the user's request using the generated compared result of the fixed length identifiers.

The invention of claim 3 is a transmitting and receiving system, comprising:
a transmitting apparatus having:
a transmission data storing means for storing contents data,
an identifier adding means for adding an indefinite length identifier to the contents data, and
a transmitting means for transmitting the contents data and the indefinite length identifier; and
a receiving apparatus having:
a receiving means for receiving data that is transmitted,
a first identifier converting means for converting an indefinite length identifier contained in the data into a fixed length identifier,
a reception information storing means for storing contents data contained in the data, the indefinite length identifier, and the fixed length identifier,
an inputting means for inputting a user's request for contents data,
a second identifier converting means for converting an indefinite length identifier added to the contents data corresponding to the user's request into a fixed length identifier, and
a contents data identifying means for comparing the fixed length identifier stored in the reception information storing means with the fixed length identifier that is output from the second identifier converting means, generating the compared result of the fixed length identifiers, and identifying the contents data corresponding to the user's request using the generated compared result of the fixed length identifiers.

The invention of claim 4 is a transmitting apparatus for transmitting contents data, comprising:
a transmission data storing means for storing contents data;
an identifier adding means for adding an indefinite length identifier to the contents data;
an identifier converting means for converting the indefinite length identifier into a fixed length identifier; and
a transmitting means for transmitting the contents data, the indefinite length identifier, and the fixed length identifier.

The invention of claim 5 is a receiving apparatus for receiving contents data, comprising:
a receiving means for receiving data that is transmitted;
a reception information storing means for storing contents data contained in the data and a fixed length identifier;
an inputting means for inputting a user's request for contents data;
an identifier converting means for converting an indefinite length identifier added to the contents data corresponding to the user's request into a fixed length identifier; and
a contents data identifying means for comparing the fixed length identifier stored in the reception information storing means with the fixed length identifier that is output from the identifier converting means, generating the compared result of the fixed length identifiers, and identifying the contents data corresponding to the user's request using the generated compared result of the fixed length identifiers.

The invention of claim 7 is a transmitting and receiving system, comprising:
a transmitting apparatus having:
a transmission data storing means for storing contents data,
an identifier adding means for adding an indefinite length identifier to the contents data,
an identifier converting means for converting the indefinite length identifier into a fixed length identifier;
a transmitting means for transmitting the contents data, the indefinite length identifier, and the fixed length identifier; and
a receiving apparatus having:
a receiving means for receiving data that is transmitted,
a reception information storing means for storing contents data and an indefinite length identifier contained in the data and the fixed length identifier,
an inputting means for inputting a user's request for contents data,
an identifier converting means for converting an indefinite length identifier added to the contents data corresponding to the user's request into a fixed length identifier, and
a contents data identifying means for comparing the fixed length identifier stored in the reception information storing means with the fixed length identifier that is output from the identifier converting means, generating the compared result of the fixed length identifiers, and identifying the contents data corresponding to the user's request using the generated compared result of the fixed length identifiers.

The invention of claim 8 is a transmitting method for transmitting contents data, comprising the steps of:
storing contents data;
adding an indefinite length identifier to the contents data;
converting the indefinite length identifier into a fixed length identifier; and
transmitting the contents data, the indefinite length identifier, and the fixed length identifier.

The invention of claim 9 is a receiving method for receiving contents data, comprising the steps of:
receiving data that is transmitted;
storing contents data, an indefinite length identifier, and a fixed length identifier contained in the data;
converting the indefinite length identifier contained in the data into a fixed length identifier;
inputting a user's request for contents data;
converting an indefinite length identifier added to the contents data corresponding to the user's request into a fixed length identifier;
comparing the result of the first identifier converting step with the result of the second identifier converting step; and
identifying the contents data corresponding to the user's request using the result of the fixed length identifier comparing step.

According to the present invention set forth in claims 1 and 3, an indefinite length identifier such as a URI added to contents data included in data received by the receiving apparatus is converted into a fixed length identifier using the Hash function or the like. In addition, an indefinite length identifier added to contents data corresponding to a user's request is converted into a fixed length identifier using the Hash function or the like. These identifiers are compared. Corresponding to the compared result, the contents data corresponding to the user's request is identified.

According to the present invention set forth in claims 4, 5, 7, and 9, after an indefinite length identifier is added to contents data, a fixed length identifier into which an indefinite length identifier has been converted using the Hash function or the like is further added to the contents data. The resultant contents data is transmitted by a transmitting apparatus. The fixed length identifier is compared with a fixed length identifier into which an indefinite length identifier added to contents data corresponding to a user's request has been converted using the Hash function or the like by a receiving apparatus. Corresponding to the compared result, the contents data corresponding to the user's request is identified.

### Brief Description of Drawings

Fig. 1 is a schematic diagram showing an example of the structure of a digital broadcasting system according to an embodiment of the present invention;
Fig. 2 is a block diagram showing an example of a structure of a contents data transmitting portion of a broadcasting station according to the embodiment of the present invention;
Fig. 3 is a block diagram showing an example of the structure of a receiving terminal according to the embodiment of the present invention;
Fig. 4 is a schematic diagram showing an example of a descriptor for adding a URI according to the embodiment of the present invention;
Fig. 5 is a schematic diagram showing an example of the data structure of an EIT;
Fig. 6 is a schematic diagram showing an example of a script for adding a URI according to the embodiment of the present invention;
Fig. 7 is a flow chart for explaining a URI converting process according to the embodiment of the present invention;
Fig. 8 is a flow chart for explaining a URI comparing process according to the embodiment of the present invention;
Fig. 9 is a block diagram showing an example of the structure according to a contents data transmitting portion of the broadcasting station according to another embodiment of the present invention;
Fig. 10 is a block diagram showing an example of the structure of a receiving terminal unit according to the other embodiment of the present invention;
Fig. 11 is a schematic diagram showing an example of a descriptor used for adding a URI according to the other embodiment of the present invention; and
Fig. 12 is a schematic diagram showing an example of a notation for adding a URI according to the other embodiment of the present invention.

### Best Modes for Carrying out the Invention

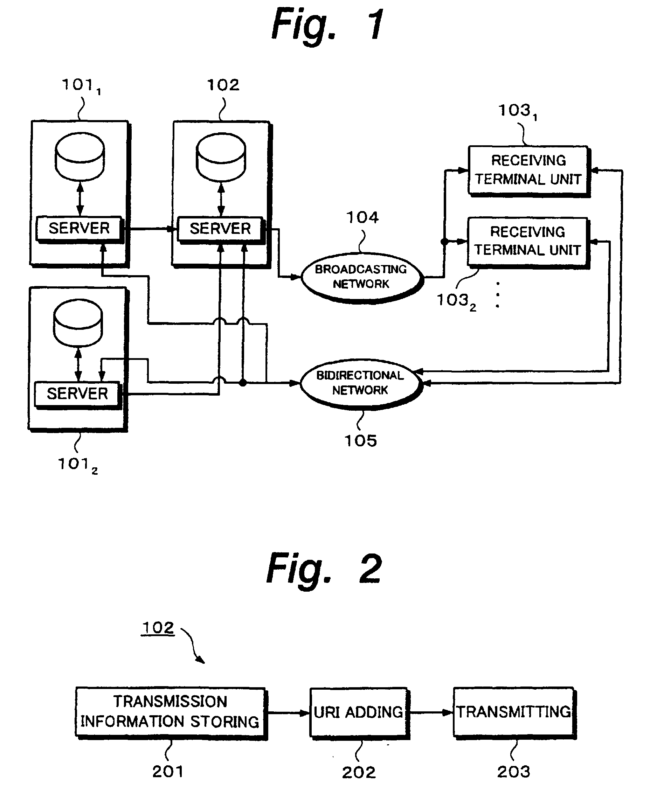

Fig. 1 shows an example of the structure of a digital broadcasting system according to an embodiment of the present invention. Referring to Fig. 1, information providers 101₁, 101₂, ... each have a server, a HDD (Hard Disk Drive), and so forth. Each of the information providers 101₁, 101₂, ... stores and/or transmits contents data supplied using a database composed of such structural portions. Examples of contents data are WWW pages and video/audio streams. The information providers 101₁, 101₂, ... are connected to a broadcasting station 102 through a bidirectional network 105. The information providers 101₁, 101₂, ... can transmit contents data to the broadcasting station 102 through the bidirectional network 105.

In addition, the information providers 101₁, 101₂, ... are connected to receiving terminal units 103₁, 103₂, ... through the bidirectional network 105. The information providers 101₁, 101₂, ... can transmit contents data to the receiving terminal units 103₁, 103₂, .. . through the bidirectional network 105.

The broadcasting station 102 has a server, a HDD, and so forth. The broadcasting station 102 stores and/or supply contents data that is transmitted to a broadcasting network 104 to a database composed of the structural portions thereof. Examples of the contents data are broadcast programs. The broadcasting station 102 is connected to the receiving terminal units 103₁, 103₂, ... through the broadcasting network 104. Thus, the broadcasting station 102 can supply the contents data and a URI that identifies thereof to the receiving terminal units 103₁, 103₂, ... through the broadcasting network 104. In addition, the broadcasting station 102 can receive contents data from the information providers 101₁, 101₂, ... through the bidirectional network 105 or a dedicated line and supply the received contents data to the receiving terminal units 103₁, 103₂, ... through the broadcasting network 104.

Each of the receiving terminal units 103₁, 103₂, ... designates desired contents data with a URI. Examples of contents data designated with a URI are a program that is transmitted (broadcast) through the broadcasting network 104 on real time basis, a program that is pre-transmitted through the broadcasting network 104 and stored to the receiving terminal units 103₁, 103₂, ..., and data that is accessed through the bidirectional network 105 on demand basis. Although the present invention can be applied to a contents data identifying process that is accessed through any route, in the following description, it is assumed that contents data that is transmitted through the broadcasting network 104 is identified.

Fig. 2 shows an example of the structure of a contents data transmitting portion of the broadcasting station 102. Referring to Fig. 2, a transmission information storing portion 201 stores contents data supplied to the receiving terminal units 103₁, 103₂, ... In addition, the transmission information storing portion 201 may temporarily store contents data supplied by the information providers 101₁, 101₂, ... The transmission information storing portion 201 may be a HDD or the like. Data stored in the transmission information storing portion 201 is supplied to a URI adding portion 202 at a predetermined timing. The URI adding portion 202 adds a URI as an identifier to each resource of the supplied information, encodes URI information, and supplies the encoded URI information to a transmitting portion 203. The transmitting portion 203 transmits the data supplied from the URI adding portion 202 to the broadcasting network 104 or the like.

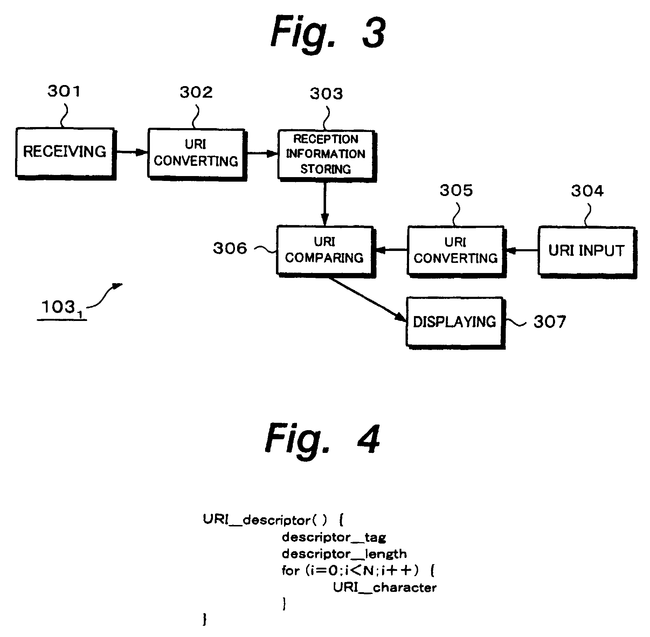

Fig. 3 shows an example of the structure of the receiving terminal unit 103₁. Referring to Fig. 3, a receiving portion 301 receives data transmitted through the broadcasting network 104 or the like and supplies the reception data to a URI converting portion 302. The URI converting portion 302 performs a process for converting URI information contained in the supplied data into a Hash function value and obtains a fixed length identifier (this identifier is referred to as Hash function value). The fixed length hash function value is supplied and stored to a reception information storing portion 303 along with data received by the receiving portion 301.

The Hash function is a conversion of which two different inputs that become the same output values cannot be found due to necessity of a huge calculation amount. In other words, an indefinite length URI is converted into a fixed length hash function value whose length is shorter than the length of the URI.

On the other hand, the user of the receiving terminal unit 103₁ inputs a URI added to desired contents data through a URI input portion 307. The URI that is input by the user is supplied to a URI converting portion 305. The URI converting portion 305 converts the input URI into a fixed length hash function value as an identifier. An output of the URI converting portion 305 is supplied to a URI comparing portion 306. The URI comparing portion 306 appropriately reads the Hash function value stored in the reception information storing portion 303 and compares it with the Hash function value supplied from the URI converting portion 305.

The comparing process for comparing fixed length Hash functions values can be performed by the URI comparing portion 306 easier and quickly than the comparing process for comparing indefinite length URIs. However, because of the characteristic of the Hash function, there is a small probability of which different URIs may be converted into the same Hash function value. Thus, even if Hash function values match each other, a process for determining whether or not URIs match each other is performed.

As the compared result, when the Hash function value stored in the reception information storing portion 303 matches the Hash function value supplied from the URI converting portion 305, the following process is performed.

In other words, indefinite length URIs corresponding to Hash function values that match as the determined result (namely, an infinite length URI that is stored in the reception information storing portion 303 and a URI that is input through the URI converting portion 305) are compared. As the compared result, when the two indefinite length URIs match each other, it can be determined that the contents data to which the indefinite length URI is added is contents data that the user desires. The identified data is supplied from the URI comparing portion 306 to a displaying portion 307 of a digital television receiver or the like. With the displaying portion 307, the user can see and listen to desired information. The structure of the receiving terminal unit 103₁ may be the same as the structure of the receiving terminal unit 103₂.

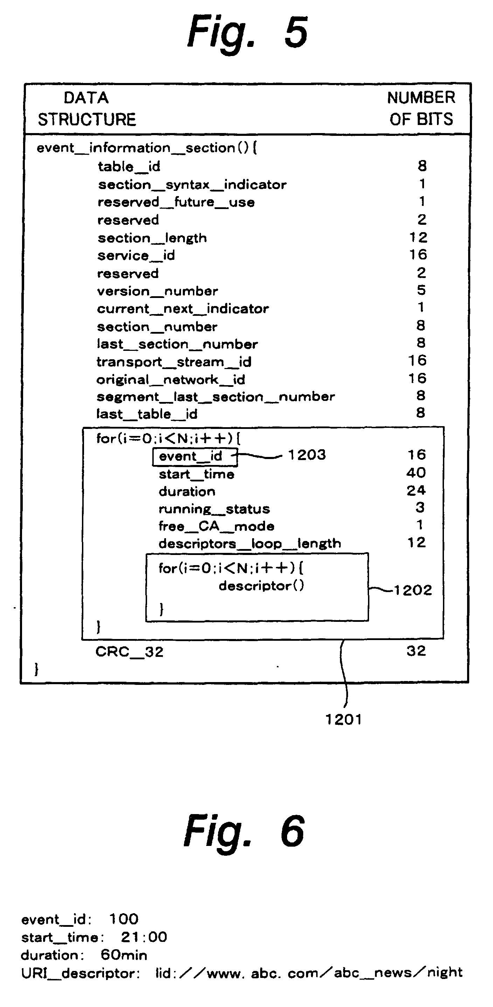

Fig. 4 shows an example of a descriptor used in a conventional digital broadcast. The descriptor is used for adding a URI. In this example, the descriptor contains a descriptor tag, a descriptor length, and N characters (each is composed of eight bits). On the other hand, in SI (Service Information) corresponding to DVB or the like, an EIT (Event Information Table) is used. The EIT contains information of for example a program title and broadcast time data added to contents data. Fig. 5 shows an example of the data structure of the EIT. Information about each program is represented in a frame 1201. The frame 1201 has event_id 1203 that identifies each program and a descriptor area 1202. Using this descriptive format, with reference to a script in the descriptor shown in Fig. 4, a URI is correlated with event_id.

Next, the URI adding process performed by the URI adding portion 202 (refer to Fig. 2) will be described. Fig. 6 shows an example of a script for adding a URI. In this example, a URI "lid://www.abc.co m/abc_news/night" is added to a program identified by event_id = 100, namely, ABC news that starts at 21:00 and whose duration is 60 minutes. Thus, a HTML document transmitted as a data broadcast contains an URI "lid://www.abc.com/abc_news/ night". When the user selects it, a channel tuning operation for the program or a timer recoding operation thereof can be performed.

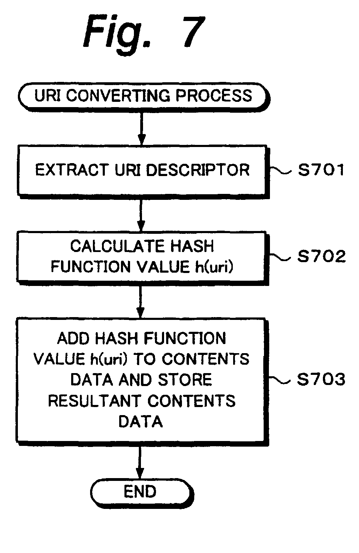

Next, with reference to a flow chart shown in Fig. 7, the URI converting process performed by the URI converting portion 302 (refer to Fig. 3) will be described. A URI descriptor is extracted from received data (at step S701). With a URI character string contained in the URI descriptor, a Hash function value corresponding to for example MD 5 (Message Digest 5) is calculated (at step S702). As the result at step S702, an indefinite length character string uri is converted into a Hash function value (namely, a fixed length character string) h(uri). The hash function value h(uri) is added to contents data. The resultant contents data is stored to the reception information storing portion 303 (at step S703).

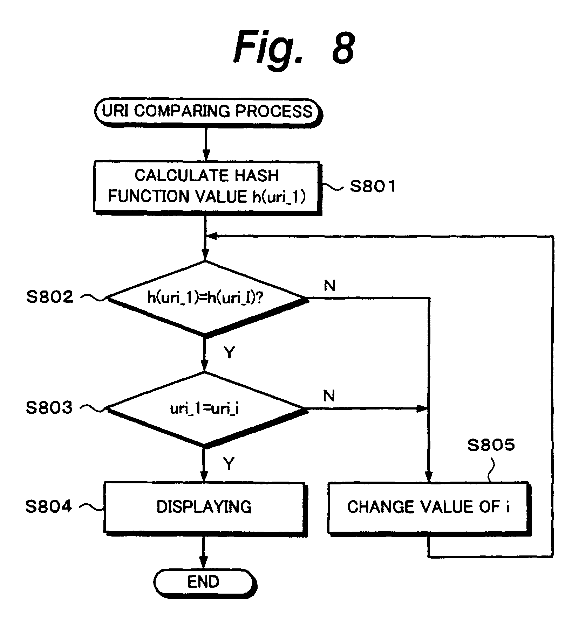

Next, with reference to a flow chart shown in Fig. 8, the URI comparing process performed by the URI comparing portion 306 (refer to Fig. 3) will be described. A Hash function value corresponding to MD 5 or the like is calculated with an input character string of a URI character string uri_1 that is input by the user through the URI input portion 304 (refer to Fig. 3). Thus, a Hash function value h(uri_1) is obtained (at step S801). The Hash function value h(uri_1) is compared with the Hash function value h(uri_1) calculated and stored (refer to Fig. 7) (at step S802). As the determined result at step S802, when the Hash function value h(uri_1) matches the Hash function value h(uri_i), the flow advances to step S803. Otherwise, the flow advances to step S805.

At step S803, indefinite length URI character strings that have not been converted into fixed length Hash function values (namely, uri_1 and uri_1) are compared. Because of the characteristic of the Hash function, there is a probability of which Hash function values corresponding to different input URI character strings match each other. Thus, at step S803, it is determined whether uri_1 matches uri_i. As the determined result at step S803, when uri_1 matches uri_i, the flow advances to step S804. Otherwise, the flow advances to step S805. At step S804, a process for displaying contents data to which uri_i that matches uri_1 is added on the displaying portion 307 or the like is performed. At step S805, the value of i is changed. Thereafter, the flow advances to step S802.

In the above-described processes, indefinite length URI character strings are converted into fixed length identifiers using the Hash function or the like. With the fixed length identifiers, a comparing process is performed. Only when a match is detected, with the indefinite length URIs corresponding to the fixed length identifiers, a comparing process is performed. Thus, the frequency of which the process for comparing indefinite length URIs can be decreased. Consequently, the process for comparing URIs can be effectively performed at high speed. In addition, the load imposed to the receiving terminal units 103₁, 103₂, ... can be alleviated.

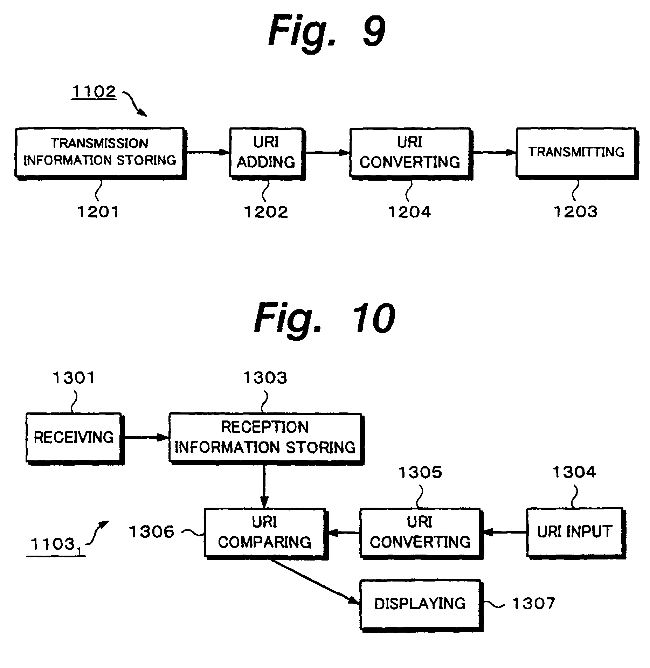

In the above-described embodiment, the process for converting URI character strings into Hash function values is performed by the receiving terminal units 103₁, 103₂, ... Alternatively, such a process can be performed on the transmitter side. This case will be described as another embodiment of the present invention. The structure of a transmitting and receiving system according to the other embodiment of the present invention may be the same as that according to the above-described embodiment of the present invention. Next, with reference to Fig. 9, a broadcasting station 1102 according to the other embodiment of the present invention will be described.

In Fig. 9, as a transmission information storing portion 1201 and a URI adding portion 1202, the transmission information storing portion 201 and the URI adding portion 202 shown in Fig. 2 can be used. A URI converting portion 1204 is disposed downstream of the URI adding portion 202. The URI converting portion 1204 performs a process for converting an indefinite length URI character string added to contents data by the URI adding portion 1202 into a fixed length identifier using the Hash function or the like. The URI converting portion 1204 adds the fixed length character string to an output of the URI adding portion 202. The generated data is supplied to a transmitting portion 1203. The transmitting portion 1203 performs a process for transmitting the supplied data to the broadcasting network 104 or the like.

Next, with reference to Fig. 10, a receiving terminal unit 1103₁ according to the other embodiment of the present invention will be described. In Fig. 10, a receiving portion 1301 receives data transmitted through the broadcasting network 104 or the like. The data received by the receiving portion 1301 is data of which an indefinite length URI, a fixed length identifier that is generated using the Hash function or the like, and so forth are added to contents data. The data received by the receiving portion 1301 is supplied to a reception information storing portion 1303. As the reception information storing portion 1303, a URI input portion 1307, a URI converting portion 1305, a URI comparing portion 1306, and a URI input portion 1307, the reception information storing portion 303, the URI input portion 307, the URI converting portion 305, the URI comparing portion 306, and the displaying 307 shown in Fig. 3 can be used, respectively.

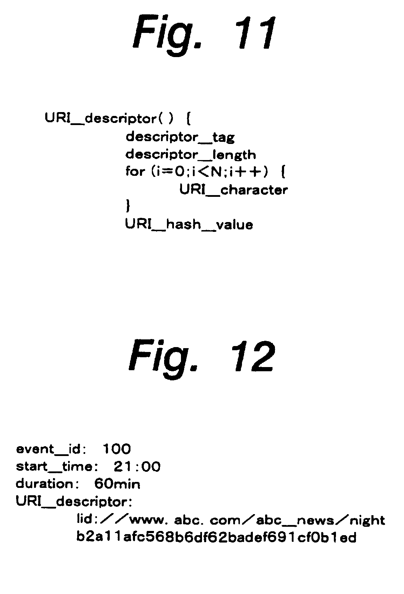

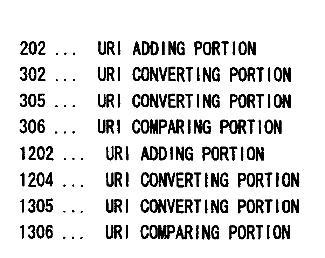

Fig. 11 shows an example of a descriptor for adding a URI according to the other embodiment of the present invention. As with the example of the descriptor according to the above-described embodiment described with reference to Fig. 4, the descriptor shown in Fig. 11 contains a descriptor tag, a descriptor length, N characters, and a URI Hash function value URI_hash_value.

Fig. 12 shows an example of a script for storing an URI in an EIT descriptor area. In this example, as with an example of a script according to the above-described embodiment shown in Fig. 6, a URI "lid://www.abc.com/abc_news/night" is added to a program identified by event_id = 100, namely, ABC news that starts at 21:00 and whose duration is 60 minutes. However, in this example, a Hash function value b2a11afc568b6df62badef691cf0b1ed corresponding to the Hash function MD 5 is also added.

According to the present invention, an indefinite length identifier such as a URI added to contents data included in data received by the receiving apparatus is converted into a fixed length identifier using the Hash function or the like. In addition, an indefinite length identifier added to contents data corresponding to a user's request is converted into a fixed length identifier using the Hash function or the like. These identifiers are compared. Corresponding to the compared result, the contents data corresponding to the user's request is identified.

In addition, according to the present invention, after an indefinite length identifier is added to contents data, a fixed length identifier into which an indefinite length identifier has been converted using the Hash function or the like is further added to the contents data. The resultant contents data is transmitted by a transmitting apparatus. The fixed length identifier is compared with a fixed length identifier into which an indefinite length identifier added to contents data corresponding to a user's request has been converted using the Hash function or the like by a receiving apparatus. Corresponding to the compared result, the contents data corresponding to the user's request is identified.

In these processes, fixed length identifiers are effectively compared at high speed. Only when a match is detected, indefinite length identifiers are compared.

Thus, in the process for identifying contents data, the frequency of which the comparing process that is slow and ineffective can be suppressed. As a result, the load imposed to the receiving apparatus can be alleviated. Thus, the process for receiving contents data can be performed effectively at high speed.

It should be understood by those skilled in the art that the foregoing and various other changes, omissions, and additions in the form and detail thereof may be made therein without departing from the spirit and scope of the present invention.

## Claims

1. A receiving apparatus for receiving contents data, comprising:
receiving means for receiving data that is transmitted;
first identifier converting means for converting an indefinite length identifier contained in the data into a fixed length identifier;
reception information storing means for storing contents data contained in the data, the indefinite length identifier, and the fixed length identifier;
inputting means for inputting a user's request for contents data;
second identifier converting means for converting an indefinite length identifier added to the contents data corresponding to the user's request into a fixed length identifier; and
contents data identifying means for comparing the fixed length identifier stored in said reception information storing means with the fixed length identifier that is output from said second identifier converting means, generating the compared result of the fixed length identifiers, and identifying the contents data corresponding to the user's request using the generated compared result of the fixed length identifiers.

2. The receiving apparatus as set forth in claim 1,
wherein when said contents data identifying means has determined that the fixed length identifier stored in said reception information storing means matches the fixed length identifier that is output from said second identifier converting means as the compared result of the fixed length identifiers, said contents data identifying means compares the indefinite length identifier corresponding to the fixed length identifier stored in said reception information storing means with the indefinite length identifier corresponding to the fixed length identifier that is output from said second identifier converting means and generates the compared result of the indefinite length identifiers, and
wherein when said contents data identifying means has determined that the indefinite length identifier corresponding to the fixed length identifier stored in said reception information storing means matches the indefinite length identifier corresponding to the fixed length identifier stored in said reception information storing means with the indefinite length identifier corresponding to the fixed length identifier that is output from said second identifier converting means as the determined result of the indefinite length identifiers, said contents data identifying means determines that the contents data identified by the indefinite length identifier is the contents data corresponds to the user's request.

3. A transmitting and receiving system, comprising:
a transmitting apparatus having:
transmission data storing means for storing contents data,
identifier adding means for adding an indefinite length identifier to the contents data, and
transmitting means for transmitting the contents data and the indefinite length identifier; and
a receiving apparatus having:
receiving means for receiving data that is transmitted,
first identifier converting means for converting an indefinite length identifier contained in the data into a fixed length identifier,
reception information storing means for storing contents data contained in the data, the indefinite length identifier, and the fixed length identifier,
inputting means for inputting a user's request for contents data,
second identifier converting means for converting an indefinite length identifier added to the contents data corresponding to the user's request into a fixed length identifier, and
contents data identifying means for comparing the fixed length identifier stored in said reception information storing means with the fixed length identifier that is output from said second identifier converting means, generating the compared result of the fixed length identifiers, and identifying the contents data corresponding to the user's request using the generated compared result of the fixed length identifiers.

4. A transmitting apparatus for transmitting contents data, comprising:
transmission data storing means for storing contents data;
identifier adding means for adding an indefinite length identifier to the contents data;
identifier converting means for converting the indefinite length identifier into a fixed length identifier; and
transmitting means for transmitting the contents data, the indefinite length identifier, and the fixed length identifier.

5. A receiving apparatus for receiving contents data, comprising:
receiving means for receiving data that is transmitted;
reception information storing means for storing contents data contained in the data and a fixed length identifier;
inputting means for inputting a user's request for contents data;
identifier converting means for converting an indefinite length identifier added to the contents data corresponding to the user's request into a fixed length identifier; and
contents data identifying means for comparing the fixed length identifier stored in said reception information storing means with the fixed length identifier that is output from said identifier converting means, generating the compared result of the fixed length identifiers, and identifying the contents data corresponding to the user's request using the generated compared result of the fixed length identifiers.

6. The receiving apparatus as set forth in claim 5,
wherein when said contents data identifying means has determined that the fixed length identifier stored in said reception information storing means matches the fixed length identifier that is output from said second identifier converting means as the compared result of the fixed length identifiers, said contents data identifying means compares the indefinite length identifier corresponding to the fixed length identifier stored in said reception information storing means with the indefinite length identifier corresponding to the fixed length identifier that is output from said second identifier converting means and generates the compared result of the indefinite length identifiers, and
wherein when said contents data identifying means has determined that the indefinite length identifier corresponding to the fixed length identifier stored in said reception information storing means matches the indefinite length identifier corresponding to the fixed length identifier stored in said reception information storing means with the indefinite length identifier corresponding to the fixed length identifier that is output from said second identifier converting means as the determined result of the indefinite length identifiers, said contents data identifying means determines that the contents data identified by the indefinite length identifier is the contents data corresponds to the user's request.

7. A transmitting and receiving system, comprising:
a transmitting apparatus having:
transmission data storing means for storing contents data,
identifier adding means for adding an indefinite length identifier to the contents data,
identifier converting means for converting the indefinite length identifier into a fixed length identifier;
transmitting means for transmitting the contents data, the indefinite length identifier, and the fixed length identifier; and
a receiving apparatus having:
receiving means for receiving data that is transmitted,
reception information storing means for storing contents data and an indefinite length identifier contained in the data and the fixed length identifier,
inputting means for inputting a user's request for contents data,
identifier converting means for converting an indefinite length identifier added to the contents data corresponding to the user's request into a fixed length identifier, and
contents data identifying means for comparing the fixed length identifier stored in said reception information storing means with the fixed length identifier that is output from said identifier converting means, generating the compared result of the fixed length identifiers, and identifying the contents data corresponding to the user's request using the generated compared result of the fixed length identifiers.

8. A transmitting method for transmitting contents data, comprising the steps of:
storing contents data;
adding an indefinite length identifier to the contents data;
converting the indefinite length identifier into a fixed length identifier; and
transmitting the contents data, the indefinite length identifier, and the fixed length identifier.

9. A receiving method for receiving contents data, comprising the steps of:
receiving data that is transmitted;
storing contents data, an indefinite length identifier, and a fixed length identifier contained in the data;
converting the indefinite length identifier contained in the data into a fixed length identifier;
inputting a user's request for contents data;
converting an indefinite length identifier added to the contents data corresponding to the user's request into a fixed length identifier;
comparing the result of the first identifier converting step with the result of the second identifier converting step; and
identifying the contents data corresponding to the user's request using the result of the fixed length identifier comparing step.
